# EUROPEAN PATENT SPECIFICATION

(11) **EP 2 389 831 B1**
(45) Date of publication and mention of the grant of the patent: **28.11.2012**
(21) Application number: 10164329.4
(22) Date of filing: 28.05.2010
(51) Int. Cl.: A45C 11/00, A45F 5/02, H04B 1/38, H04M 1/17

(54) **Holster for a portable communication device**
Halfter für tragbare Kommunikationsvorrichtung
Étui pour dispositif de communication portable

(43) Date of publication of application: 30.11.2011
(73) Proprietor: Research In Motion Limited, Waterloo, ON N2L 3W8 (CA)
(72) Inventor: Philippe, Geoffrey Martin, South Canada Waterloo, Ontario N2J 2A9 (CA)
(74) Representative: Patel, Binesh

(56) References cited:
- JP-A- 2004 364 066
- JP-A- 2005 204 140
- US-A1- 2004 166 910
- US-A1- 2007 090 795
- US-A1- 2007 287 515
- US-B1- 6 923 313

## Description

### TECHNICAL FIELD

The present disclosure relates generally to portable devices and in particular to holsters for portable devices.

### BACKGROUND

Portable devices have become common. Users often carry one or more portable devices, including for example cell phones, media players and other portable communication, media and/or entertainment devices. The portable devices generally have a display screen and keyboard or keypad on a front surface of the portable devices. Portable devices do not require the keypads or keyboards on the front surface, which may be comprised substantially of a display screen. The display screen, as well as the front surface more generally, can become dirty from use, especially if the display screen is a touch screen.

Often users use a holster to carry the portable devices around. The holster may include a belt clip for carrying the portable device on a user's clothing. The holster may include an interior lining for preventing scratches on the surface of the portable devices. Other holsters can include soft cloth pouches or solid pouches or similar pockets.

Although holsters may have soft linings, or be fabricated from a similar cloth material, they are do not provide a way to conveniently clean the screen of the portable device.

US 2004/0166910 A1 discloses a case for a cellular phone in which an elastic member having corrugated protrusions is attached to inner side of the case. The corrugated protrusions are formed on one or both inner sides of the case facing each other. The corrugated protrusions are formed vertically or horizontally with respect to a direction in which the cellular phone is inserted. Thus, an external impact is absorbed. Also, the cellular phone does not easily slip out without an additional locking apparatus so that a possibility of losing is low. Further, when the surface of the cellular phone is contaminated, the surface of the cellular phone is cleaned by simple actions of inserting and taking out the cellular phone with respect to the case.

### SUMMARY

There is provided a holster for a portable device, The holster comprises a housing comprising a support member comprising an interior and exterior surface; and a retaining means for retaining said portable communication device adjacent at least a portion of said interior surface. The holster further comprises a cleaning mechanism comprising a cleaning head movably coupled to the housing and positioned adjacent the interior surface; and an actuator coupled to the cleaning head and positioned on an exterior portion of the holster.

### BRIEF DESCRIPTION OF THE DRAWINGS

A holster is described with reference to the drawings, in which:
Figure 1A is a side view of an illustrative holster;
Figure 1B is a front view of the illustrative holster of Figure 1A;
Figure 2A is a side view of a further illustrative holster;
Figure 2B is a side view of the further illustrative holster of Figure 2A;
Figure 3A is a side view of a further illustrative holster;
Figure 3B is a side view of the further illustrative holster of Figure 3A;
Figure 3C is an isometric view of detail of the further illustrative holster of Figure 3A;
Figure 3D is an isometric view of detail of the further illustrative holster of Figure 3A;
Figure 4A is a side view of detail of a cleaning mechanism of an illustrative holster;
Figure 4B is a side view of detail of a cleaning mechanism of an illustrative holster;
Figure 4C is a top view of detail of an attachment of the cleaning mechanism of Figure 4A; and
Figure 4D is a side view of detail of an attachment of the cleaning mechanism of Figure 4A; and

### DETAILED DESCRIPTION

Previous holsters for portable electronic devices have not included a means for cleaning the screen of the device. Various embodiments of holsters are described herein that include means for cleaning the screen, device surface, or portion thereof. As described further with reference to the various embodiments described herein, the cleaning mechanism includes a cleaning head that is attached to an actuator. The actuator may be moved in order to cause the cleaning head to move against the screen or device surface in order to remove dirt, oils, finger prints, etc.

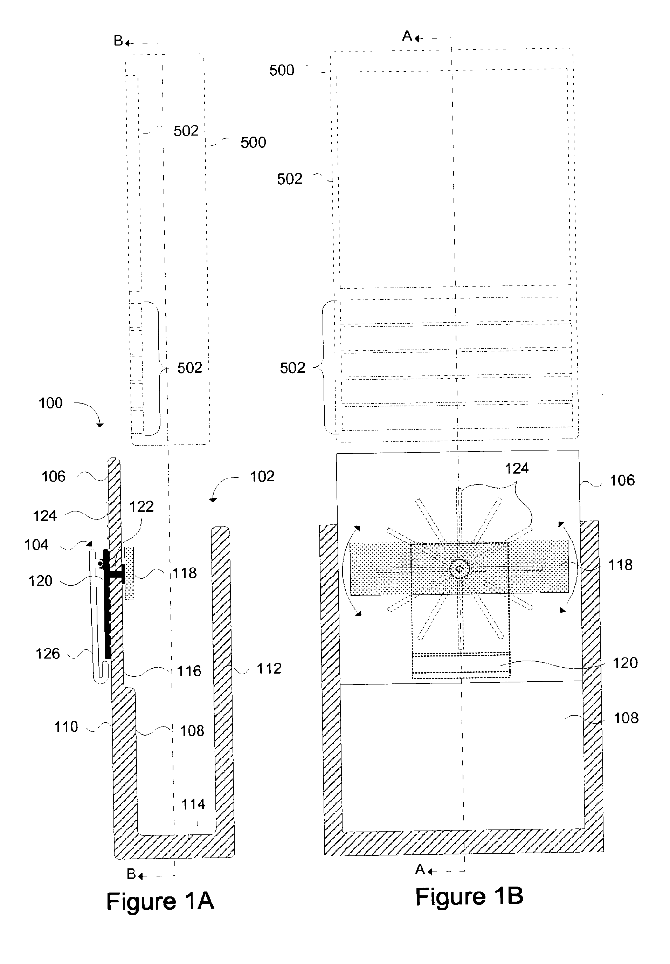

Figure 1A and 1B depict a side view and front view of a schematic of an illustrative holster. The holster **100** comprises a housing **102** for retaining a portable electronic device 500 and a cleaning mechanism **104**. The cleaning mechanism **104** may be used to clean a portion of the portable electronic device **500** when it is seated in the holster **102**. As depicted in Figures 1A and 1B, the portable electronic device, or simply device, **500** may comprise a screen **502** on a front portion of the device **500** as well as a keypad or keyboard **504**. The holster as described herein may also be advantageously used to clean portable devices with varying layouts, such as with only a screen.

The housing **102** comprises a support member **106** that has an interior surface **108** and an exterior surface **110** and a retaining means for retaining the device **500** within the holster **100**. The retaining means may include a retaining member **112** that comprises a member substantially parallel to the support member **106** and coupled to the support member **106** by a connecting web **114**. The support member **106**, connecting web **114** and retaining member **112** may define a space or pocket that the device may be retained in. The interior surface of the housing may include a recessed portion **116**. The recessed portion **116** may provide room for the cleaning mechanism to move within the housing 102. When the recessed portion **116** is present, the device **500** may sit in the holster and have a portion of the device **500**, such as the keypad or keyboard **504** rest against the interior portion 108 and have another portion of the device **500** rest against the cleaning mechanism **104.**

The cleaning mechanism **104** comprises a cleaning head **118** that is rotatably coupled to the support member **106** adjacent the interior surface **108**. An actuator **120** is coupled to the cleaning head **118** adjacent to the exterior surface **110.** The actuator **120** provides a way of rotating the cleaning head **118** within the holster. The actuator **120** may be connected to the cleaning head **118** by an attachment **122** passing through an aperture in the support member **106**. The actuator **120** and the coupled cleaning head may be rotated about the attachment **122** passing through the aperture as indicated by the arrows of Figure 1B

The aperture may be annular in shape and sized to allow the attachment **122** to rotate within the aperture. The attachment **122** may be secured on either side of the support member **106** by the cleaning head, or a portion of the attachment **122** that extends around the aperture on the interior surface **108** and the actuator that extends around the aperture on the exterior surface**110**. In order to resist rotation of the cleaning mechanism **104**, the aperture and/or the attachment **122** may be sized to have a friction fit.

Additionally or alternatively, the exterior surface **110** may include a biasing means to resist rotation or movement of the cleaning mechanism **104**. The biasing mechanism may include a plurality of bumps **124** that extend radially about the aperture. The bumps **124** co-operate with indents in the actuator to provide a force that resists rotation of the actuator **120** The actuator **120** may comprise a belt clip **126**. The belt clip **126** may be attached to the actuator **120** or may form the actuator **120.**

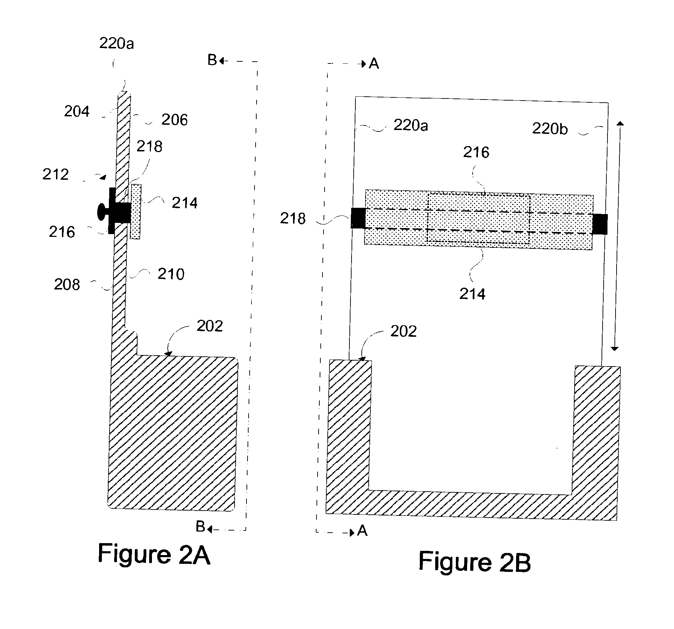

Figure 2A and 2B depict a side view and front view of a schematic of a further illustrative holster. The holster **200** includes a cleaning mechanism **212** for cleaning a portion of a surface of a device (not shown) that is seated in the holster **200.** The holster **200** is similar to the holster **100;** however, the retaining means and the cleaning mechanism differ.

The retaining means comprises a plurality of interior surfaces **202** that provide a frictional fit with the device to retain the device in the holster **200**. Although the retaining means of holster **200** differs from the retaining means of holster **100**, the retaining means still retains the device adjacent to at least a portion of the support member **106.** Similar to the holster **100**, the support member **204** of Figure 2A and 2B includes an interior surface **206** and an exterior surface **208** and may include a recessed portion **210.**

The cleaning mechanism **212** comprises a cleaning head **214** similar to the cleaning head **118** of holster **100.** However, unlike the cleaning head **118** of holster, which is rotatably coupled to the support member **106**, the cleaning head **214** is slidably coupled to the support member **204** adjacent the interior surface **206.** An actuator **216** is coupled to the cleaning head **214** to allow the cleaning head **214** to be slid up and down the support member in order to clean a surface, or portion thereof , of the device when it is in the holster **200**.

The actuator **216** may be attached to the cleaning head **214** by an attachment **218** that surrounds both external sides **220**a, **220**b of the support member **206**. Although not depicted in Figures 2A or 2B the support member **206** may include upper and lower stops in order to limit the movement of the cleaning mechanism **212**. The attachment **218** may provide a frictional fit with the support member, in order to resist movement of the cleaning mechanism **212**. The actuator **216** can move the cleaning head up and down as depicted by the arrow in Figure 2B.

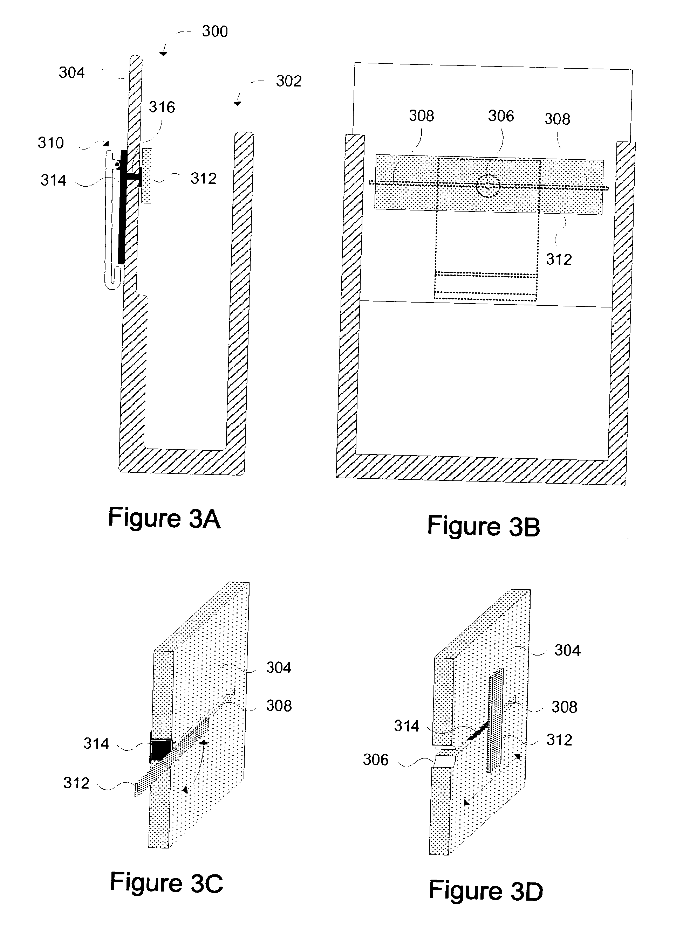

Figures 3A and 3B depict a side view and front view of a schematic of a still further illustrative holster. The holster **300** includes a housing **302** that is similar to the housing 102; however, the support member **304** of the housing **302** includes an annular aperture **306** similar to the aperture described with regards to Figures 1A and 1B. The support member **304** further includes two narrow elongated apertures **308** on either side of the annular aperture **306**. The holster **300** with the annular aperture **306** and the elongated apertures **308** allows the cleaning mechanism **310** to both rotate and slide. Similar to the holster **100**, the holster **300** includes a cleaning head **312** coupled to the support member **304** adjacent the interior surface of the support member **304**. An actuator **314** is coupled to the cleaning head **312** by an attachment **316** that passes through the apertures **306, 308**. As described with reference to Figures 1A, 1B the actuator **314** adjacent the exterior surface and a portion of the attachment **316** or cleaning head **312** that extends over the annular aperture **306** may retain the attachment **314**, as well as the actuator 314 and cleaning head 312, in position within the holster **300**

Figure 3C and 3D depict details of a portion of the holster **300**. As seen in Figures 3C and 3D, the attachment **314** comprises a rectangular member that is sized to rotate within the annular aperture **306**. When the rectangular member is rotated to be positioned vertically within the annular aperture **306**, as depicted in Figure 3C, it is not possible to slide the cleaning head horizontally across the support member **304**. However, when the rectangular member is rotated to be positioned horizontally within the annular aperture **306**, it is possible to slide the attachment within the adjoining elongated aperture **308** such that the cleaning head is slid from side to side as depicted by the arrow of Figure 3D. A although the elongated apertures **308** are described as being positioned horizontally with respect to the holster **300**, they may also be advantageously positioned vertically.

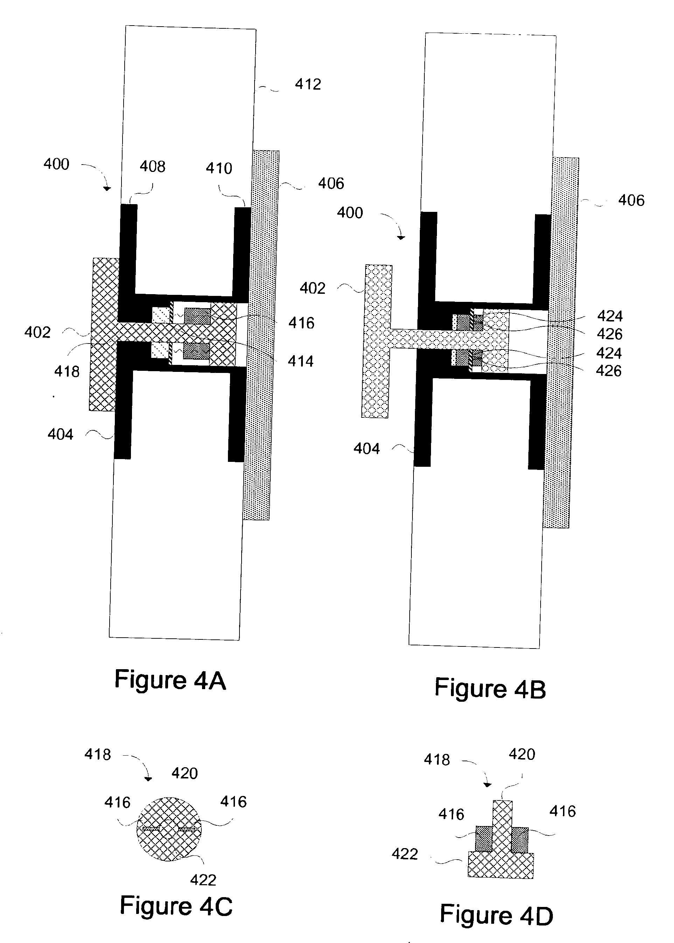

Figures 4A and 4B depict in a side view detail of a schematic of a cleaning mechanism **400.** The cleaning mechanism **400** is similar to the rotatable cleaning mechanism of Figures 1A and 1B; however, the cleaning mechanism **400** comprises an actuator **402** that is disengagable from the cleaning head, so that only if the actuator **402** is engaged with an attachment **404** to the cleaning head **406** will rotation of the actuator **402** result in rotation of the cleaning head **406**.

The attachment **404** includes two extended annular surfaces **408, 410** on either side of an aperture passing through a support member **412**. The extended annular surfaces **408**, **410** may be recessed to be flush with the interior and exterior surfaces. That attachment **404** includes an annular passage of a reduced size positioned on an exterior side of the attachment **404** and a larger sized annular passage passing through a portion of the attachment **404**. The reduced size annular passage and the larger sized annular passage are arranged within the attachment **404** such that they provide a stepped arrangement with the reduced sized annular passage located adjacent the exterior surface. The attachment **404** may rotate within the aperture of the support member **402**. The cleaning head 406 may be attached to the attachment **404**. In addition to the stepped aperture, the attachment includes a slot **414** for receiving a corresponding key **416** of an actuator **402**. When the key 416 is received within the slot **414**, the actuator **402** engages with the attachment **404** so that rotation of actuator **402** causes the attachment **404** as well as the cleaning head **406** to rotate.

The actuator **402** comprises a stepped annular member **418** that includes a reduced sized annular member **420** sized to pass through the reduced size annular passage of the attachment **404**. The attachment **404** includes an enlarged annular member **422** attached to the reduced sized annular member **420**. The enlarged annular member **422** is sized to fit within the larger sized annular passage of the attachment **404**. The actuator **402** includes a key **416** attached to the stepped annular member **418** that fit within the slot **414** of the attachment **404**.

Figures 4C and 4D depict a top view and side view of a portion of the stepped annular member **418**, that includes the reduced size annular member **420** and the enlarged annular member **422**. The stepped annular member **418** further includes the key **416** to engage with the corresponding slot **414** of the attachment **404**.

As depicted in Figures 4A and 4B, the actuator **402** may also include a biasing plate **424** and biasing means **426**. The biasing plate **424** and the biasing means 426 provide a biasing force tin order to return the actuator **402** to the disengaged position. In order to engage the actuator **402** with the attachment **404,** a handle **428**, or similar means, attached to the stepped annular member **418** of the actuator **402** is withdrawn so that the biasing means **426** are compressed, and the key **416** of the actuator **402** engage the slot **414** of the attachment **404**.

Various embodiments of a holster for a portable electronic device that includes a cleaning mechanism for cleaning a surface of the portable electronic device have been described. The cleaning head of the various devices may comprise various materials, including cloth fabric, microfiber materials, plastics, rubbers or combinations of these. Additionally, the cleaning heads of the various embodiments described herein may be removable in order to facilitate replacement.

Furthermore, although not depicted in the figures, the various holsters described herein may further include a liquid dispensing component for dispensing a liquid, for example a cleaning fluid, onto the cleaning head, or directly onto the surface of portable electronic device. The liquid dispensing component may include a separate dispensing activator in order to dispense the liquid when desired. Alternatively, the dispensing activator may be activated by the actuator of the holster.

Furthermore, although certain aspects of the holster have been described in relation to one or more of the illustrative embodiments, different aspects of each embodiment may be applied to other illustrative embodiments. For example, the biasing means described with regards to Figures 1A and 1B may be included in the other illustrative embodiments.

## Claims

1. A holster (100) for a portable device (500), the holster comprising:
a housing (102) comprising
a support member (106) comprising an interior (108) and exterior surface (110); and
a retaining means (112) for retaining said portable device adjacent at least a portion of said interior surface; and
a cleaning mechanism (104) **characterised by**
a cleaning head (118) movably coupled to the housing and positioned adjacent the interior surface; and
an actuator (120) coupled to the cleaning head and positioned on an exterior portion of the holster.

2. The holster as claimed in claim 1, wherein the support member comprises an aperture in the exterior surface and the interior surface, the actuator coupled to the cleaning head by an attachment passing through the aperture.

3. The holster as claimed in claim 2, wherein the aperture is circular and the cleaning head is rotatably coupled to the housing.

4. The holster as claimed in claim 2, wherein the aperture is elongated substantially perpendicular to a longitudinal axis of the support member and the cleaning head is slidably coupled to the housing.

5. The holster as claimed in claim 2, wherein the aperture is elongated substantially parallel to a longitudinal axis of the support member and the cleaning head is slidably coupled to the housing.

6. The holster as claimed in any one of claims 1 - 5, wherein the cleaning head is slidably coupled to the housing through an attachment to the actuator, the attachment to the actuator comprising a web surrounding opposite sides of the support member.

7. The holster as claimed in any one of claims 1 - 6, wherein the actuator is disengagably coupled to the cleaning head.

8. The holster as claimed in any one of claims 1 - 7, further comprising a biasing means coupled to the cleaning mechanism, the biasing means resisting movement of the cleaning mechanism.

9. The holster as claimed in any one of claims 1 - 8, wherein the actuator comprises a belt clip.

10. The holster as claimed in any one of claims 1 - 9, wherein the retaining means comprises at least one of:
a retaining member opposite the support member, the retaining member coupled to the support member by a web, thereby defining an interior space for retaining said portable device; or
one or more interior surfaces frictionally engagable with said portable device, thereby retaining said portable device within the housing.

11. The holster as claimed in any one of claims 1 - 10, wherein the cleaning head comprises at least one of:
a cloth material;
a microfibre material;
a plastic material; or
a rubber material.

12. The holster as claimed in any one of claims 1 - 11, wherein the cleaning head is detachable from the cleaning mechanism.

13. The holster as claimed in any one of claims 1 - 12, further comprising a liquid dispenser for dispensing a liquid.

14. The holster as claimed in claim 13, wherein the liquid dispenser dispenses a portion of said liquid onto the cleaning head or onto a surface of said portable device when inserted into the holster.

15. The holster as claimed in claim 13, wherein the liquid dispenser comprises a release mechanism for causing a portion of said liquid to be dispensed, wherein the release mechanism is activated by movement of the actuator of the cleaning mechanism or the release mechanism is activated separately from movement of the actuator of the cleaning mechanism.

## Patentansprüche

1. Ein Holster bzw. eine Tasche (100) für eine tragbare Vorrichtung (500), wobei das Holster aufweist:
ein Gehäuse (102), das aufweist
ein Unterstützungselement (106), das eine innere (108) und eine äußere Oberfläche (110) aufweist; und
ein Haltemittel (112) zum Halten der tragbaren Vorrichtung angrenzend an zumindest einen Teil der inneren Oberfläche; und
einen Reinigungsmechanismus (104), der **gekennzeichnet ist durch**
einen Reinigungskopf (118), der beweglich mit dem Gehäuse gekoppelt ist und angrenzend an die innere Oberfläche positioniert ist; und
einen Aktuator (120), der mit dem Reinigungskopf gekoppelt ist und an einem äußeren Teil des Holsters positioniert ist.

2. Das Holster gemäß Anspruch 1, wobei das Unterstützungselement eine Öffnung in der äußeren Oberfläche und der inneren Oberfläche aufweist, wobei der Aktuator mit dem Reinigungskopf über eine Befestigung gekoppelt ist, die durch die Öffnung geht.

3. Das Holster gemäß Anspruch 2, wobei die Öffnung kreisförmig ist und der Reinigungskopf drehbar mit dem Gehäuse gekoppelt ist.

4. Das Holster gemäß Anspruch 2, wobei die Öffnung im Wesentlichen senkrecht zu einer Längsachse des Unterstützungselements langgestreckt ist und der Reinigungskopf verschiebbar mit dem Gehäuse gekoppelt ist.

5. Das Holster gemäß Anspruch 2, wobei die Öffnung im Wesentlichen parallel zu einer Längsachse des Unterstützungselements langgestreckt ist und der Reinigungskopf verschiebbar mit dem Gehäuse gekoppelt ist.

6. Das Holster gemäß einem der Ansprüche 1-5, wobei der Reinigungskopf verschiebbar mit dem Gehäuse gekoppelt ist durch eine Befestigung an dem Aktuator, wobei die Befestigung an dem Aktuator ein Gewebe aufweist, das gegenüberliegende Seiten des Unterstützungselements umgibt.

7. Das Holster gemäß einem der Ansprüche 1-6, wobei der Aktuator lösbar mit dem Reinigungskopf gekoppelt ist.

8. Das Holster gemäß einem der Ansprüche 1-7, das weiter aufweist ein Beeinflussungsmittel, das mit dem Reinigungsmechanismus gekoppelt ist, wobei das Beeinflussungsmittel einer Bewegung des Reinigungsmechanismus widersteht.

9. Das Holster gemäß einem der Ansprüche 1-8, wobei der Aktuator einen Gürtelclip aufweist.

10. Das Holster gemäß einem der Ansprüche 1-9, wobei das Haltemittel zumindest eines aufweist:
ein Halteelement gegenüber dem Unterstützungselement, wobei das Halteelement mit dem Unterstützungselement über ein Gewebe gekoppelt ist, wodurch ein Innenraum zum Halten der tragbaren Vorrichtung definiert wird; oder
eine oder mehrere innere Oberflächen, die mit der tragbaren Vorrichtung reibungsmäßig in Kontakt gebracht werden können, wodurch die tragbare Vorrichtung in dem Gehäuse gehalten wird.

11. Das Holster gemäß einem der Ansprüche 1-10, wobei der Reinigungskopf zumindest eines aufweist:
ein Stoffmaterial;
ein Mikrofasermaterial;
ein Kunststoffmaterial; oder
ein Gummimaterial.

12. Das Holster gemäß einem der Ansprüche 1-11, wobei der Reinigungskopf von dem Reinigungsmechanismus lösbar ist.

13. Das Holster gemäß einem der Ansprüche 1-12, das weiter einen Flüssigkeitsspender zur Abgabe einer Flüssigkeit aufweist.

14. Das Holster gemäß Anspruch 13, wobei der Flüssigkeitsspender einen Teil der Flüssigkeit auf den Reinigungskopf oder auf eine Oberfläche der tragbaren Vorrichtung abgibt, wenn diese in das Holster eingeführt wird.

15. Das Holster gemäß Anspruch 13, wobei der Flüssigkeitsspender einen Freigabemechanismus aufweist zum Veranlassen, dass ein Teil der Flüssigkeit abgegeben wird, wobei der Freigabemechanismus durch eine Bewegung des Aktuators des Reinigungsmechanismus aktiviert wird oder der Freigabemechanismus getrennt von einer Bewegung des Aktuators des Reinigungsmechanismus aktiviert wird.

## Revendications

1. Étui (100) pour dispositif portable (500), l'étui comprenant :
un logement (102) comprenant :
un élément de support (106) comprenant une surface intérieure (108) et une surface extérieure (110) ; et
un moyen de retenue (112) destiné à retenir ledit dispositif portable adjacent à au moins une partie de ladite surface intérieure ; et
un mécanisme de nettoyage (104) **caractérisé par** :
une tête de nettoyage (118) couplée de façon mobile au logement et située adjacente à la surface intérieure ; et
un organe d'actionnement (120) couplé à la tête de nettoyage et situé sur une partie extérieure de l'étui.

2. Étui selon la revendication 1, dans lequel l'élément de support comprend une ouverture dans la surface extérieure et la surface intérieure, l' organe d'actionnement étant couplé à la tête de nettoyage par un élément de fixation passant par l'ouverture.

3. Étui selon la revendication 2, dans lequel l'ouverture est circulaire et la tête de nettoyage est couplée de façon rotative au logement.

4. Étui selon la revendication 2, dans lequel l'ouverture est allongée sensiblement perpendiculairement à un axe longitudinal de l'élément de support et la tête de nettoyage est couplée de façon coulissante au logement.

5. Étui selon la revendication 2, dans lequel l'ouverture est allongée sensiblement parallèlement à un axe longitudinal de l'élément de support et la tête de nettoyage est couplée de façon coulissante au logement.

6. Étui selon l'une quelconque des revendications 1 à 5, dans lequel la tête de nettoyage est couplée de façon coulissante au logement par le biais d'un élément de fixation à l'organe d'actionnement, l'élément de fixation à l'organe d'actionnement comprenant une paroi entourant des côtés opposés de l'élément de support.

7. Étui selon l'une quelconque des revendications 1 à 6, dans lequel l'organe d'actionnement est couplé de manière séparable à la tête de nettoyage.

8. Étui selon l'une quelconque des revendications 1 à 7, comprenant, en outre, un moyen de sollicitation couplé au mécanisme de nettoyage, le moyen de sollicitation résistant au déplacement du mécanisme de nettoyage.

9. Étui selon l'une quelconque des revendications 1 à 8, dans lequel l'organe d'actionnement comprend une attache ceinture.

10. Étui selon l'une quelconque des revendications 1 à 9, dans lequel le moyen de retenue comprend au moins l'un des éléments suivants :
un élément de retenue en regard de l'élément de support, l'élément de retenue étant couplé à l'élément de support par une paroi, de façon à définir un espace intérieur pour retenir ledit dispositif portable ; ou
une ou plusieurs surfaces intérieures engagées par friction avec ledit dispositif portable, de façon à retenir ledit dispositif portable au sein du logement.

11. Étui selon l'une quelconque des revendications 1 à 10, dans lequel la tête de nettoyage comprend au moins l'un des éléments suivantes :
un matériau de type étoffe ;
un matériau microfibre ;
un matériau plastique ; ou
un matériau caoutchouc.

12. Étui selon l'une quelconque des revendications 1 à 11, dans lequel la tête de nettoyage est détachable du mécanisme de nettoyage.

13. Étui selon l'une quelconque des revendications 1 à 12, comprenant, en outre, un distributeur de liquide pour distribuer un liquide.

14. Étui selon la revendication 13, dans lequel le distributeur de liquide distribue une partie dudit liquide sur la tête de nettoyage ou sur une surface dudit dispositif portable lors de l'insertion dans l'étui.

15. Étui selon la revendication 13, dans lequel le distributeur de liquide comprend un mécanisme de libération destiné à amener une partie dudit liquide à être distribuée, le mécanisme de libération étant actionné par déplacement de l'organe d'actionnement du mécanisme de nettoyage ou le mécanisme de libération étant actionné séparément du déplacement de l'organe d'actionnement du mécanisme de nettoyage.
